# EUROPÄISCHE PATENTANMELDUNG

(11) **EP 2 101 115 A1**
(43) Veröffentlichungstag der Anmeldung: **16.09.2009**
(21) Anmeldenummer: 09003285.5
(22) Anmeldetag: 06.03.2009
(51) Int. Cl.: F24D 17/00

(54) **Trinkwasserbereitung mit thermischer Legionellen-Entkeimung unter Verwendung eines Strahlpumpenreglers**

(30) Priorität: 10.03.2008 DE 202008003382 U
(71) Anmelder: Rösner, Egon, 21447 Handorf (DE)
(72) Erfinder: Rösner, Egon, 21447 Handorf (DE)
(74) Vertreter: Klinghardt, Jürgen

(57) **Zusammenfassung**

Beschrieben wird eine Vorrichtung zur Trinkwasseraufbereitung, aufweisend einen Vorlaufkreis (A) mit einer Wärmequelle und einen von dorther gespeisten Zirkulationskreis (B) mit einem Wärmeübertrager (3), dessen Sekundarseite mit den Zapfstellen der Verbraucher verbunden ist. Das Besondere der Erfindung besteht darin, dass im Vorlaufkreis (A) ein Strahlpumpenregler (2) vorgesehen ist, der einerseits geregelt Wasser in den Zirkulationskreis (B) einsetzend andererseits Wasser aus dem Zirkulationskreis (B) ansaugt.

## Beschreibung

Die Erfindung bezieht sich auf eine Vorrichtung zur Trinkwasseraufbereitung, aufweisend einen Vorlaufkreis mit einer Wärmequelle und einen von dorther gespeisten Zirkulationskreis mit einem Wärmeübertrager, dessen Sekundärseite mit den Zapfstellen der Verbraucher verbunden ist und ist **dadurch gekennzeichnet, dass** im Vorlaufkreis ein Strahlpumpenregler vorgesehen ist, der einerseits geregelt Wasser in den Zirkulationskreis eingibt und andererseits Wasser aus dem Zirkulationskreis ansaugt.

Die vorgestellte Art der Brauchwassererwärmung unterscheidet sich besonders von jeder derzeit praktizierten Art, die mit innenliegender Heizschlange in Bollern oder anderen großen Gefäßen mit Wasserspeicherung eingebracht sind. Die Vorzüge der hier vorgestellten Lösung bestehen in einer geradezu blitzartigen Aufwärmung der Brauchwassererwärmung und dem dahinterliegenden Rohrsystem sowie einer sehr niedrigen Rücklauftemperatur von nur 18-21°C zum Wärmelieferanten oder Heizkessel. Dies ist nicht vergleichbar mit derzeit bekannten Systemen, die eine Rücklauftemperatur von 50 - 70°C haben und sich an der Ladetemperatur orientieren.

Ein energetisch und arbeitszeitlich unwirtschaftlicher Betrieb der Legionellen-Entkeimung und er Brauchwasserwärmung in relativ großen bis sehr großen Wasserspeichern entfällt.

### Daraus ergibt sich:

Der erforderliche Energieaufwand reduziert sich um ca. 90%.
Die normale Aufwärmungszeit verkürzt sich um ca. 88%.
Die Entkeimung unter Beibehaltung der gleichen Entkeimungszeit bei verringertem Wasservolumen im System verringert sich um ca. 92%.
Die Abkühlzeit auf eine Betriebstemperatur, welche frei von Verbrennungsgefahr ist, reduziert sich um ca. 98%.

Die Investitionskosten werden je nach Größe und Anlagenanforderung zwischen 60% bis 84% gemindert, bedingt durch sinnvolle Reduzierung von wartungsintensiven Geräten und Armaturen.

Der Präzisionsstrahlpumpenregler auf der Primärseite vor dem Wärmeübertrager erfüllt mehre Funktionen:

Er ist ein Regelventil mit einer 20-fach höheren Auflösung als ein Regelventil.
Er erreicht die niedrigste Rücklauftemperatur.
Erhält das Δt konstant (Temperaturabstand zwischen Vor- und Rücklauf)
Er ist ein Durchflussbegrenzer
Er ist ein Druckregler
Er ist ein Überströmungsregler
Er erfüllt die Funktion einer drehzahlgeregelten Pumpe.

Die Erfindung zeichnet sich dadurch aus, dass sie:
Vom Aufbau her sehr einfach ist,
Legionellen sicher vernichtet werden,
   kein Wasserspeicher mehr benötigt wird,
   extrem hohe Energieeinsparungen erreicht werden, da Wasserspeicher entfallen, stehendes Wasser im ganzen System vermieden wird,
   Temperaturschichtungen vermieden werden,
   Kalkablagerungen extrem stark reduziert und sogar vermieden werden,
   keine zusätzliche Hilfsenergie benötigt wird,
   extrem energiesparend bei der Aufbereitung ist,
   in allen Leistungsbereichen Anwendung finden kann,
   im Normalbetrieb Rücklauftemperaturen von bis zu 18°C erreicht werden können, keine besondere Wartungen erforderlich sind,
   besonders wirtschaftlich bei Fernwärmebetrieb ist und
   besonders wirtschaftlich in Anlagen mit Kondensatioriskesseln ist.

Nachfolgend werden bevorzugte Ausführungsbeispiele der Erfindung anhand der beiliegenden Zeichnungen näher erläutert. Es zeigen:
Figur 1 eine schematische Darstellung der Trinkwasseraufbereitungsvorrichtung gemäß einer ersten bevorzugten Ausführung der Erfindung; und
Figur 2 eine schematische Darstellung der Trinkwasseraufbereitungsvorrichtung gemäß einer zweiten bevorzugten Ausführung der Erfindung.

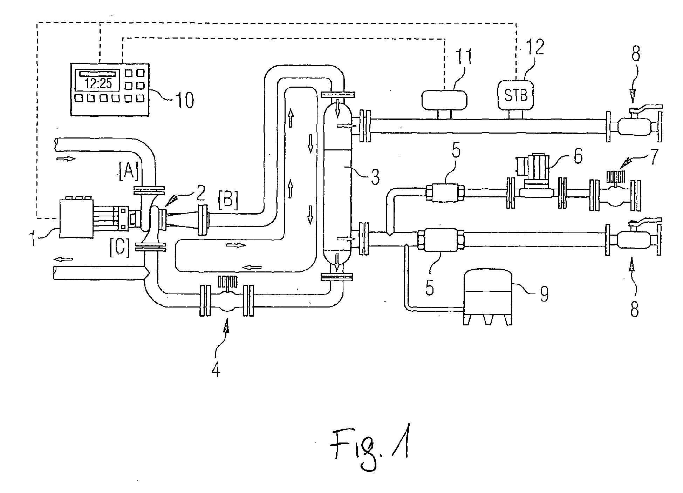

Bei der in Figur 1 gezeigten ersten bevorzugten Ausführung einer Trinkwasseraufbereitungsanlage wird über den Vorlauf A des Präzisionsstrahlpumpenreglers 2 Wasser eingespritzt, wobei gleichzeitig ein entsprechender Anteil des Rücklaufwassers aus dem Anschluss C angesaugt und beigemischt wird. Dieses Gemisch gelangt an den Wärmeübertrager 3. Dieser wird durchströmt und das Wasser kehrt zum Anschluss C zurück. Das überschüssige Volumen der Einspritzung geht zur Versorgungsquelle zurück. Die verlaufende Zirkulation von B über Wärmeübertrager 3 nach Anschluss C wird entsprechend dem Hub des Stellantriebs im Bereich zwischen 1-100% aufrechterhalten. Der für den Wärmeübertrager 3 berechnete Renolds Wert wird zu 92% auch bei minimaler Last aufrechterhalten, so dass eine besonders hohe Wirtschaftlichkeit beim Wärmeaustausch erreicht wird. Der Temperaturfühler 11 fühlt die Temperatur für die Brauchwasserversorgung und die Überhitzung zur Entkeimung der Legionellen im Betrieb ab. Der Sicherheitstemperaturbegrenzer 12 überwacht die maximale zulässige Grenztemperatur. Das einstellbare Drosselventil 7 dient zur Arbeitspunktbestimmung der Zirkulationspumpe 6, um die Temperaturverluste der Zirkulation auf 2 K einzustellen.

Der Stellantrieb ist mit einer Notstellfunktion ausgestattet und schließt entweder über den Sicherheitstemperaturbegrenzer 12 oder bei Netzausfall sofort.

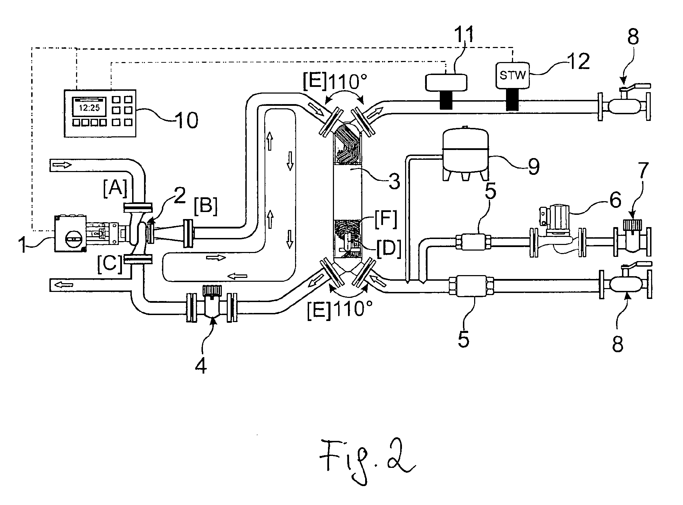

Die in Figur 2 dargestellte zweite bevorzugte Ausführung der Trinkwasseraufbereitungsvorrichtung unterscheidet sich von der ersten Ausführung gemäß Figur 1 dadurch, dass der Einlass und der benachbarte Auslass am Wärmeübertrager 3 und/oder die Anschlüsse hierfür in einem Winkel von etwa 110° zueinander ausgerichtet bzw. angeordnet sind, um Einlassturbolenzen zu eliminieren, wodurch wirkungsvoll eine sog. Inselbildung in diesem Bereich vermieden wird, und ferner im Innern eines im Wärmeübertrager 3 vorgesehenen Rohrbündels F ein Rohrkern D angeordnet ist, welcher auftretende Schwingungen des Rohrbündels F eliminiert, Kalbablagerungen reduziert und die Entstehung einer Inselbildung der Legionelle innerhalb des Rohrbündels F nicht oder zumindest nicht im wesentlichen mehr zulässt.
- 1: Stellantrieb
- 2: Strahlpumpenregler
- 3: Wärmeübertrager
- 4: Drossel zur Arbeitspunkteinstellung
- 5: Rückschlagventil
- 6: Zirkulationspumpe
- 7: Drossel zur Arbeitspunkteinstellung
- 8: Absperrventil
- 9: Ausdehnungsgefäß
- 10: Digitaler Temperaturregler
- 11: Temperaturfühler
- 12: Sicherheitstemperaturbegrenzer

## Patentansprüche

1. Vorrichtung zur Trinkwasseraufbereitung, aufweisend einen Vorlaufkreis (A) mit einer Wärmequelle und einen von dorther gespeisten Zirkulationskreis (B) mit einem Wärmeübertrager (3), dessen Sekundärseite mit den Zapfstellen der Verbraucher verbunden ist, **dadurch gekennzeichnet, dass** im Vorlaufkreis (A) ein Strahlpumpenregler (2) vorgesehen ist, der einerseits geregelt Wasser in den Zirkulationskreis (B) einsetzt und andererseits Wasser aus dem Zirkulationskreis (B) ansaugt.
